(19) Europäisches Patentamt
European Patent Office
Office européen des brevets

(11) **EP 2 618 914 B1**

# (12) EUROPEAN PATENT SPECIFICATION

(45) Date of publication and mention
of the grant of the patent:
**03.11.2021 Bulletin 2021/44**

(21) Application number: **11776875.4**

(22) Date of filing: **16.09.2011**

(51) Int Cl.:
***B01D 53/14*** *(2006.01)*

(86) International application number:
**PCT/IB2011/054062**

(87) International publication number:
**WO 2012/038868 (29.03.2012 Gazette 2012/13)**

(54) **SOLVENT COMPOSITION FOR CARBON DIOXIDE RECOVERY**

LÖSUNGSMITTELZUSAMMENSETZUNG ZUR RÜCKGEWINNUNG VON KOHLENDIOXID

COMPOSITION DE SOLVANT POUR LA RÉCUPÉRATION DE DIOXYDE DE CARBONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2010 IN 2238DE2010**

(43) Date of publication of application:
**31.07.2013 Bulletin 2013/31**

(73) Proprietor: **Carbon Clean Solutions Limited
34 Bridge Street
Reading RG1 2LU (GB)**

(72) Inventor: **Bumb, Prateek
Jaipur,
Rajasthan 302018 (IN)**

(74) Representative: **Forresters IP LLP
Skygarden
Erika-Mann-Straße 11
80636 München (DE)**

(56) References cited:
**EP-A2- 0 224 348         WO-A1-2004/089512
DE-A1- 19 828 977         US-A- 4 440 731
US-A1- 2005 277 778**

**Description**

### TECHNICAL FIELD

The present disclosure relates to a solvent composition for recovering carbon dioxide from gaseous mixture. More particularly, the disclosure relates to improved solvent formulations that utilizes less energy and increased carbon capture efficiency. The disclosure also addresses the high $CO_2$ loading capacity and energy requirement over the existing carbon dioxide capture solvent.

### BACKGROUND

Carbon dioxide ($CO_2$) is a major Greenhouse gas responsible for global warming, and hence, much effort is being put on the development of technologies for its capture from process gas streams (e.g., flue gas, natural gas, coke oven gas and refinery off-gas).

Carbon dioxide is emitted in large quantities from large stationary sources. The largest single sources of carbon dioxide are conventional coal-fired power plants. Technology developed for such sources should also be applicable to $CO_2$. Capture from gas and oil fired boilers, combined cycle power plants, coal gasification, and hydrogen plants. Absorption/stripping are primarily a tail-end technology and are therefore suitable for both existing and new boilers. The use of absorption and stripping processes for recovery of the carbon dioxide from the gaseous mixture is known in the art. The conventional carbon capture process consists of an absorber column, a stripper column and compression unit. Gaseous mixture enters the absorber where it comes in contact with the solvent. The rich stream leaving the absorber has carbon dioxide trapped in solvent composition. The captured carbon dioxide is stripped in the stripper column with the help of steam energy provided by the reboiler. The overhead stream from the stripper is condensed and the condensate is passed back to the stripper while the gaseous stream, rich in carbon dioxide is compressed and sent for the suitable applications.

The major drawback of conventional carbon capture system is that the high energy is needed to strip the carbon dioxide from the rich solvent. Steam of higher pressure is required to strip the carbon dioxide and thus stripper reboiler and compressor account for major derating of the industrial unit.

Further, a number of different $CO_2$ separation technologies are available, absorption performed with chemical solvents representing the most feasible option. In such operations, alkanolamine-based absorbents and their blends are extensively applied. Industrially important alkanolamines for $CO_2$ removal are the primary amine, the secondary amine and the tertiary amine. The invention addresses the high $CO_2$ loading capacity and energy requirement over the existing carbon dioxide capture solvent. The disadvantage with the conventional solvent is that the system requires more energy. Conventional solvent has several disadvantages with the treating gaseous mixture such as chemical degradation, thermal degradation and corrosivity.

Document EP 0 224 348 A2 discloses a process for the removal of acid gases from a gaseous mixture. Document DE 198 28 977 A1 is directed to a method for removal of acid gas components from gases. Document WO 2004/089512 A1 discusses a polyamine/alkali salt blend for carbon dioxide removal from gas streams. Finally, document US 4,440,731 A is directed to a process for removal of carbon dioxide from industrial gases.

In light of foregoing discussion, it is necessary to develop a system which consumes less energy for recovering the carbon dioxide from the gaseous mixture. And also to provide an improved solvent formulations that seek to overcome the obstacles associated with the conventional solvent system and reduce the energy requirement in the whole capture process.

RU2244587 discloses the fine purification of gases with removal of carbon dioxide at elevated pressures.

### SUMMARY OF THE DISCLOSURE

The invention is set out in the appended set of claims. In particular, the invention relates to:
A solvent for recovery of carbon dioxide from gaseous mixture, comprising:

> N-methyldiethanolamine (MDEA) at a concentration from 10 wt% to 50 wt%,
> a promoter which is piperazine or N-methyl piperazine and is at a concentration from 0.5 wt% to 50 wt%, and
> a carbonate buffer consisting of potassium carbonate and potassium bicarbonate, at a concentration between 2 wt% and 25 wt%.

An aspect of the present disclosure relates to a solvent composition for recovery of carbon dioxide from gaseous mixture, comprising diethanolamine, piperazine or its derivative, alkali salt, optionally along with cupric carbonate.

In an aspect of the disclosure, the amine is N-methyl diethanolamine, at concentration ranging from about 10 wt% to about 50 wt%.

In an aspect of the disclosure, the piperazine derivative is selected from piperazine, at concentration ranging from about 0.5 wt% to about 50 wt% or N - methyl piperazine at concentration ranging from about 0.5 wt% to about 50 wt%.

In an aspect of the disclosure, the alkali salt is potassium carbonate and a bicarbonate salt, at concentration ranging from about 2 wt% to about 25 wt%.

In an aspect of the disclosure, the cupric carbonate is at concentration ranging from about 50ppm to 300ppm.

## BRIEF DESCRIPTION OF ACCOMPANYING FIGURES

In order that the disclosure may be readily understood and put into practical effect, reference will now be made to exemplary embodiments as illustrated with reference to the accompanying figures. The figure together with a detailed description below, are incorporated in and form part of the specification, and serve to further illustrate the embodiments and explain various principles and advantages, in accordance with the present disclosure where:

Figure 1 shows experimental set-up for stirred cell reactor.

Figure 2 shows experimental set up for Vapor liquid Equilibrium.

Figure 3 shows experimental results and Model predicted equilibrium partial pressure of $CO_2$ above aqueous 20 wt% $K_2CO_3$ solution at different temperatures.

Figure 4 shows experimental results and Model predicted equilibrium partial pressure of $CO_2$ above aqueous 30 wt% $K_2CO_3$ solution at different temperatures.

Figure 5 shows Equilibrium partial pressure of $CO_2$ over aqueous mixtures of (MDEA+PZ).

Figure 6 shows ENRTL model predicted equilibrium $CO_2$ partial pressure over (4.081 m MDEA+0.653 m $K_2CO_3$+ 0.147 m $KHCO_3$+ 0.408 m PZ) in the temperature range of (313 - 333) K.

Figure 7 shows ENRTL model predicted activity coefficients of species in liquid phase of a (4.081 m MDEA+0.653 m $K_2CO_3$+ 0.147 m $KHCO_3$+ 0.408 m PZ) solvent loaded with $CO_2$ at 313 K.

Figure 8 shows ENRTL model predicted equilibrium liquid phase concentration of different species of a (4.081 m MDEA+0.653 m $K_2CO_3$+ 0.147 m $KHCO_3$+ 0.408 m PZ) solvent loaded with $CO_2$ at 323 K.

Figure 9 shows ENRTL model predicted pH of a (4.081 m MDEA+0.653 m $K_2CO_3$+ 0.147 m $KHCO_3$+ 0.408 m PZ) solvent loaded with $CO_2$ at different temperatures.

Figure 10 shows ENRTL model predicted equilibrium amine partial pressure (amine volatility) of a (4.081 m MDEA+0.653 m $K_2CO_3$+ 0.147 m $KHCO_3$+ 0.408 m PZ) solvent loaded with $CO_2$ at different temperatures.

Figure 11 shows ENRTL model predicted specific heat of the mixture of a (4.081 m MDEA+0.653 m $K_2CO_3$+ 0.147 m $KHCO_3$+ 0.408 m PZ) solvent loaded with $CO_2$ at different temperatures.

Figure 12 shows ENRTL model predicted equilibrium liquid phase concentration (mol/kg water) of different species of a (4.081 m MDEA+0.653 m $K_2CO_3$+ 0.147 m $KHCO_3$+ 0.408 m PZ) solvent loaded with $CO_2$ at 323 K.

Figure 13 shows differential Heat of Absorption ($-\Delta H_{abs}$) vs loading of APBS1 Solvent.

Figure 14 shows differential Heat of Absorption ($-\Delta H_{abs}$) vs loading (between 0.2 to 0.6) of APBS1 Solvent.

Figure 15 shows equilibrium $CO_2$ partial pressure over MDEA-MPZ-$K_2CO_3$-$KHCO_3$-$H_2O$ blend at temperature 25 °C.

Figure 16 shows literature Comparison with ($CO_2$ + MDEA) and ($CO_2$ + MDEA-MPZ-$K_2CO_3$-$KHCO_3$).

Figure 17 shows a process flow diagram of conventional carbon capture system.

## DETAILED DESCRIPTION OF THE DISCLOSURE

The proposed solvent mixture provides faster $CO_2$ absorption rates and greater capacity for $CO_2$ and exhibit lower heat of $CO_2$ desorption. The lower heat of $CO_2$ desorption decreases the reboiler steam requirements. The faster absorption kinetics creates richer solutions given the same absorber capital costs. The proposed solvent mixture composition has 10 wt% to 50 wt% N-methyldiethanolamine, 0.5% to 50 wt% piperazine or its derivatives, 2 wt% to 25 wt% alkali salts and optionally with cupric carbonate.

In the present disclosure, kinetics of the $CO_2$ reaction with MDEA + piperazine (PZ) + $K_2CO_3$ + $KHCO_3$ + $H_2O$ mixture is investigated. Besides, PZ is replaced by another promoter, viz. N-methyl piperazine (MPZ) and the reaction kinetics is investigated using the formulated aqueous solution, viz. MDEA + MPZ + $K_2CO_3$ + $KHCO_3$ + $H_2O$. Due to its tertiary amine characteristics, MDEA has high $CO_2$ removal capacity. Although potassium carbonate has low reactivity with $CO_2$, it has low regeneration cost. PZ and MPZ, which is a cyclic diamine, are used as a promoter.

In an embodiment of the present disclosure, the technology of the instant Application is further elaborated with the help of following examples. However, the examples should not be construed to limit the disclosure.

## ABBREVIATIONS USED:

| | |
|---|---|
| MDEA | N-methyldiethanolamine |
| MPZ | n-Methyl Piperazine |
| PZ | Piperazine |
| APBS | Amine promoted buffer solvent |
| $K_2CO_3$ | Potassium carbonate |
| $KHCO_3$ | Potassium bicarbonate |
| VLE | Vapor liquid equilibrium |
| $\rho$ | Density |
| M | Viscosity |
| $D_{CO2}$ | Diffusivity |
| $H_{CO2}$ | Solubility |
| $k_{obs}$ | Observed rate constant |
| $\alpha_{CO2}$ | Loading |
| $P_{CO2}$ | Partial pressure of carbon dioxide |
| $\Delta H_{abs}$ | Heat of absorption |

## EXAMPLE 1: CHARACTERIZATION OF THE SOLVENT SYSTEM

The conventional $CO_2$ capture solvents has several disadvantages with the treating flue gas such as chemical degradation, thermal degradation, corrosivity, high capital and operating expenditure. This aspect of disclosure relates the improved solvent formulations that seek to overcome the obstacles associated with the conventional solvent system. The solvent formulation refers to a mixture of solvent with specific concentration for each component. The proposed solvent mixture provides faster $CO_2$ absorption rates, greater capacity for $CO_2$ and exhibit lower heat of $CO_2$ desorption. The lower heat of $CO_2$ desorption can decrease the reboiler steam requirements. The faster absorption kinetics can create richer solutions given the same absorber capital costs.

## Experimental Setup for stirred cell reactor

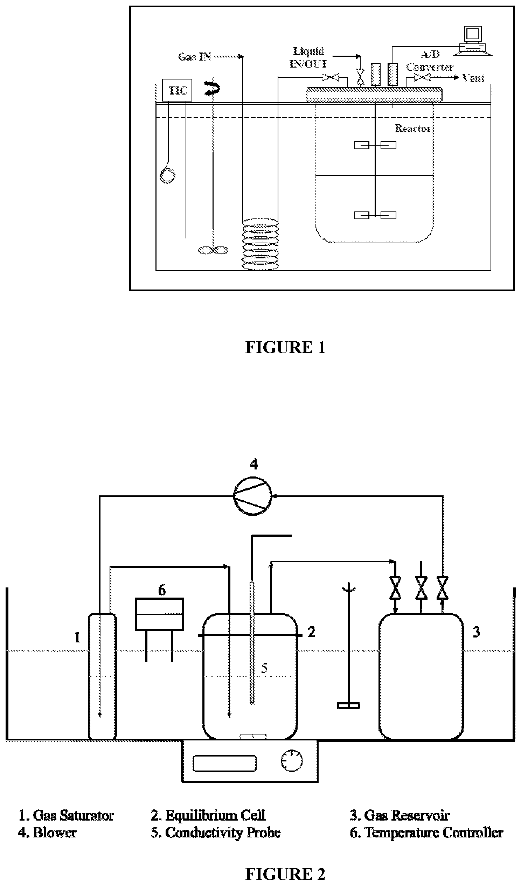

A glass stirred cell reactor with a plane, horizontal gas-liquid interface was used for the absorption studies (see Figure 1). The main advantage of the stirred cell is that the rates of absorption can be measured using a liquid with a single, known composition. This easy-to-use experimental device (inner diameter 97 mm, height 187 mm) is operated batch wise. The total volume of the reactor is 1.45 $dm^3$ and the interfacial surface area is 7.5 x $10^{-3}$ $m^2$. The reactor is equipped with a flange made of stainless steel. A pressure transducer (Trans Instruments, UK, 0-1 bar), mounted on this flange and coupled with a data acquisition system, enabled measurement of the total pressure inside the reactor, the uncertainty in this measurement being $\pm 1$ mbar. The reactor is also equipped with inlet and outlet ports for the gas and liquid phases. The entire assembly is proven to have no leak. The setup is supplied by a variable speed magnetic drive. The gas and liquid are stirred by two impellers, mounted on the same shaft. The speed of stirring could be adjusted to the desired value with an accuracy of $\pm 1$ rpm. The impeller speed during kinetic measurements is limited to 60 rpm, in order to ensure that the gas-liquid interface is undisturbed. The reactor is immersed in a water bath to guarantee isothermal conditions. The temperature is adjusted to the desired value with an accuracy of $\pm 0.1$ K. The solute gas passed through a coil, also kept in the water bath, before being charged inside the reactor.

**Experimental Procedure on stirred cell reactor**

In each experiment, the reactor is charged with 0.4 $dm^3$ of the absorbent. The gas inside the reactor is then purged with $N_2$ to ensure an inert atmosphere. Thereafter, $N_2$ is released through the gas outlet port. All the lines are closed and the reactor content attained the desired temperature. $CO_2$ from the gas cylinder is then charged inside the reactor, this being considered as the starting point for the reaction. The reactor content is stirred at the desired speed of agitation. The decrease in system pressure due to reaction is monitored by the pressure transducer and the " $Pco_2$ vs. t" data are recorded during 30 seconds using the data acquisition system. These data are plotted for the time interval between t = 5 s and t = 25 s and fitted to a third degree polynomial using the least-square regression. The absorption rates are calculated from the values of the slope $-dP_{co2} / dt$. This measurement method based on the fall-in-pressure technique enabled a simple and straightforward estimation of the absorption rates. Further, no analysis of the liquid phase is required and the pressure decrease is the only factor necessary for the evaluation of the kinetic parameters. In the range of agitation speeds studied, the mass transfer rate is independent of the gas-side mass transfer coefficient, $k_G$. Therefore, the $CO_2$ absorption process is liquid-phase-controlled. The stirred-cell reactor is also used for measuring $N_2O$ solubility in the aqueous mixtures. To measure solubility, the reactor content is stirred at high agitation speed (~1000 rpm) for 6 h to ensure that equilibrium is attained. Using the recorded values of the initial and final pressure, the solubility is determined. The reproducibility of results is checked and the error in all experimental measurements is found to be less than 3 %.

The density and viscosity of the aqueous blend comprising MDEA, $K_2CO_3$, $KHCO_3$, promoter (viz. piperazine and N-methyl piperazine) are measured at 298, 303 and 308 K using a commercial densitometer and Ostwald viscometer, respectively. From viscosity measurements, the values of the $N_2O$ diffusivity in the activated solutions by using the modified Stokes-Einstein correlation:

$$(D_{N20} \, \mu^{0.80})_{Amine} = const = (D_{N20} \, \mu^{0.80})_{Water}$$

The values of $D_{CO2}$ in solutions are found using the $N_2O$ analogy. It states that, at any given temperature, the ratio of the diffusivities of $N_2O$ and $CO_2$ in amine solution is equal to that ratio in water.

$$\left(\frac{D_{N20}}{D_{CO2}}\right)_{Amine} = \left(\frac{D_{N20}}{D_{CO2}}\right)_{Water}$$

$N_2O$ solubility in amine blends is estimated. The $CO_2$ solubility in solution is estimated using the $N_2O$ analogy as follows:

$$\left(\frac{H_{N20}}{H_{CO2}}\right)_{Amine} = \left(\frac{H_{N20}}{H_{CO2}}\right)_{Water}$$

Formulae Used for Diffusivity ($m^2$/s) Measurement:

$$D_{N20} = 5.07 \times 10^{-6} \, exp\left(-\frac{2371}{T}\right)$$

$$D_{CO2} = 2.35 \times 10^{-6} \, exp\left(-\frac{2119}{T}\right)$$

**Experimental set-up and experimental procedure for Vapor Liquid equilibrium**

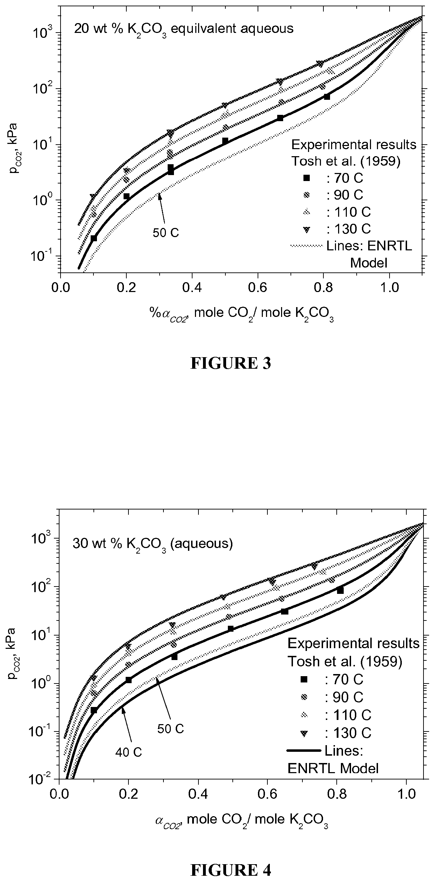

The experimental set-up (Figure 2, consisted of a gas saturator or gas bubbler, equilibrium cell and gas reservoir). The equilibrium cell, in which the gas-liquid equilibrium is allowed to attain, is fitted with magnetic stirrer to enhance the equilibrium process. Conductivity probe is inserted in equilibrium cell to ensure attained gas-liquid equilibrium. The exit of the cell is connected to a glass reservoir. The gas circulating blower is used to circulate gas in the system. It took gas from reservoir and bubbled in gas saturator. The pressure maintained in the system is practically near atmosphere. The entire assembly is placed in constant temperature bath except gas circulating blower. Since the temperatures are not widely different from ambient 303 K, the heat loss from blower to surrounding can safely be neglected. Figure 4 shows the complete experimental set-up.

A known quantity of solvent solution is taken in an equilibrium cell. $CO_2$ gas is injected into reservoir to get the desired partial pressure. The gas circulating blower is then started. Some $CO_2$ would get absorbed into solvent solution. To compensate this, an additional quantity of $CO_2$ gas is injected so that system is near atmospheric pressure. The approach to equilibrium is monitored with the help of conductivity probe. Since the reaction of $CO_2$ with aqueous solvent solution is ionic in nature, the concentration of ionic species remains constant after reaching equilibrium. The constant reading of conductivity probe over two - three days suggests that equilibrium is achieved. At this stage, the gas composition is identical in cell as well as in gas reservoir.

The reservoir is then isolated from the system with the help of valves. A known quantity of caustic, which is in far excess, than required, is added to the reservoir with the help of a gas syringe. It is the well mixed by shaking and kept for 48 h, so that entire amount of $CO_2$ gas is absorbed into aqueous NaOH solution. A sample is taken from the reservoir with the help of gas tight syringe and introduced into caustic solution to convert it into $Na_2CO_3$. With the help of $CO_2$ ion-selective electrode, both samples are analyzed for carbonate, hence $CO_2$ content is back calculated both is gas phase and in liquid phase.

**EXAMPLE 2: $CO_2$-MDEA-PZ-$K_2CO_3$-$KHCO_3$-$H_2O$ SYSTEM**

Promoted amines/carbonate blends are potentially attractive solvents for $CO_2$ capture, and may be recommended for flue gas cleaning. In the present disclosure, the $CO_2$ reaction with MDEA + PZ + $K_2CO_3$ + $KHCO_3$ + $H_2O$ mixture is investigated. Due to its tertiary amine characteristics, MDEA has high $CO_2$ removal capacity. Although potassium bicarbonate has low reactivity with $CO_2$, it has low regeneration cost. Piperazine (PZ), which is a cyclic diamine, is used as a promoter.

The $CO_2$ reaction with promoted amines/carbonate blend is investigated over the ranges in temperature, 298 to 308 K and PZ concentrations, 0.15 to 0.45 M. The concentrations of MDEA, $K_2CO_3$ and $KHCO_3$ in solution are 2.5, 0.4 and 0.09 M, respectively. In the fast reaction regime, the rate of absorption is independent of the liquid-side mass transfer coefficient and hence it should not depend on the agitation speed. Experimentally there is no change in the absorption rate, while varying the stirring speed in the range 50-90 rpm at 308 K. Hence, it can be concluded that the investigated system belongs to the fast reaction regime systems.

**a) Estimation of physical properties for MDEA-PZ-$K_2CO_3$-$KHCO_3$-$H_2O$ blends**

Knowledge on physical properties is essential for the estimation of reaction kinetics. The density and viscosity of the blend comprising MDEA, $K_2CO_3$, $KHCO_3$, promoter (piperazine) and $H_2O$ are measured at 298 K, 303 K and 308 K. MIX* = MDEA (2.5 M), $KHCO_3$ (0.09M), $K_2CO_3$ (0.4 M) and Piperazine

Density ($\rho$), Viscosity ($\mu$) and Diffusivity Data ($D_{CO2}$) for MIX*:

**Table 1:** Density ($\rho$), Viscosity ($\mu$) and Diffusivity Data ($D_{CO2}$) for MIX* at different Piperazine concentration, at 298, 303 and 308 K.

| T | PZ Conc. | $\rho$ | $\mu$ | $D_{CO2} \times 10^9$ |
|---|---|---|---|---|
| (K) | (M) | (kg/m$^3$) | (mPa.s) | (m$^2$/s) |
| | | | | |
| | Mix + 0.15 | 1059.12 | 1.53 | 1.312 |
| | Mix + 0.25 | 1071.08 | 1.62 | 1.249 |
| 298 | Mix + 0.35 | 1082.26 | 1.70 | 1.202 |
| | Mix + 0.45 | 1092.79 | 1.80 | 1.149 |

(continued)

| T | PZ Conc. | $\rho$ | $\mu$ | $D_{CO2} \times 10^9$ |
|---|---|---|---|---|
| (K) | (M) | (kg/m$^3$) | (mPa.s) | (m$^2$/s) |
| | | | | |
| 303 | Mix + 0.15 | 1058.37 | 1.25 | 1.581 |
| | Mix + 0.25 | 1070.23 | 1.36 | 1.484 |
| | Mix + 0.35 | 1081.07 | 1.46 | 1.398 |
| | Mix + 0.45 | 1091.00 | 1.58 | 1.316 |
| | | | | |
| 308 | Mix + 0.15 | 1057.04 | 1.10 | 1.831 |
| | Mix + 0.25 | 1069.38 | 1.18 | 1.721 |
| | Mix + 0.35 | 1079.84 | 1.25 | 1.651 |
| | Mix + 0.45 | 1088.21 | 1.35 | 1.549 |

**b) Reaction kinetic data for MDEA-PZ-K$_2$CO$_3$-KHCO$_3$-H$_2$O blends**

With increase in temperature & promoter concentration cause the expected increase in the values of the observed reaction rate constants.

Mix* = MDEA (2.5 M), KHCO$_3$ (0.09M), K$_2$CO$_3$ (0.4 M) and Piperazine

$k_{obs}$ = r/(CO$_2$) = observed reaction rate constant (1/s).

**Table 2:** Observed reaction rate constant for Mix* at different piperazine concentration at 298, 303 and 308 K.

| T | PZ Conc. | $k_{obs}$ |
|---|---|---|
| (K) | (M) | (1/sec) |
| | | |
| 298 | Mix + 0.15 | 4787 |
| | Mix + 0.25 | 11371 |
| | Mix + 0.35 | 15159 |
| | Mix + 0.45 | 16675 |
| | | |
| 303 | Mix + 0.15 | 6253 |
| | Mix + 0.25 | 15569 |
| | Mix + 0.35 | 24703 |
| | Mix + 0.45 | 29292 |
| | | |
| 308 | Mix + 0.15 | 9829 |
| | Mix + 0.25 | 19915 |
| | Mix + 0.35 | 23370 |
| | Mix + 0.45 | 36394 |

**Table 3.** The effect of CO2 partial pressure on the absorption rates into aqueous mixtures of MDEA (2.5 M), PZ, $K_2CO_3$ (0.4 M) and $KHCO_3$ (0.09 M) at 298, 303 and 308 K.

| Temp. (K) | $CO_2$ pressure (kPa) | PZ (M) | Rx $10^6$ (kmol/($m^2$ s)) |
|---|---|---|---|
| 298 | 8.57 | 0.15 | 7.32 |
| | 8.16 | 0.25 | 10.8 |
| | 7.05 | 0.35 | 11.2 |
| | 3.37 | 0.45 | 5.71 |
| 303 | 6.92 | 0.15 | 5.81 |
| | 8.64 | 0.25 | 11.8 |
| | 6.77 | 0.35 | 12.3 |
| | 12.64 | 0.45 | 25.8 |
| 308 | 8.1 | 0.15 | 8.84 |
| | 6.03 | 0.25 | 9.84 |
| | 9.08 | 0.35 | 17.0 |
| | 13.04 | 0.45 | 31.6 |

**Table 4.** Kinetic and thermodynamic characteristics of mixture (MDEA = 2.5 M, PZ = 0.25 M, $K_2CO_3$ = 0.4 M and $KHCO_3$ = 0.09 M)

| Temp K | $CO_2$ Pressure kPa | Rx $10^6$ kmol/ ($m^2$s) | $k_{obs}$ 1/s |
|---|---|---|---|
| 298 | 8.16 | 10.8 | 11371 |
| 303 | 8.64 | 11.8 | 15569 |
| 308 | 6.03 | 9.84 | 19915 |

## c) Solubility data for MDEA-PZ-$K_2CO_3$-$KHCO_3$-$H_2O$ blends

Knowledge on $CO_2$ solubility in solution is essential for estimation of reaction kinetics.

**Table 5** Solubility of $CO_2$ in the mixture [MDEA (2.5M) + $K_2CO_3$ (0.4M) + $KHCO_3$ (0.0925M) + PZ] at 298, 303 and 308 K

| T | PZ Conc. | $H_{CO2}$X $10^4$ |
|---|---|---|
| (K) | (M) | [kmol/($m^3$ .kPa)] |
| | | |
| 298 | Mix + 0.15 | 3.49 |
| | Mix + 0.25 | 3.51 |
| | Mix + 0.35 | 3.65 |
| | Mix + 0.45 | 3.71 |
| | | |
| 303 | Mix + 0.15 | 2.76 |
| | Mix + 0.25 | 2.84 |
| | Mix + 0.35 | 2.99 |
| | Mix + 0.45 | 3.10 |

(continued)

| T | PZ Conc. | $H_{CO_2}X 10^4$ |
|---|---|---|
| (K) | (M) | [kmol/($m^3$ .kPa)] |
| | | |
| | Mix + 0.15 | 2.65 |
| 308 | Mix + 0.25 | 2.79 |
| | Mix + 0.35 | 2.96 |
| | Mix + 0.45 | 3.06 |

**d) Vapour - Liquid Equilibrium Data for MDEA-PZ-$K_2CO_3$,-$KHCO_3$ -$H_2O$ blend.**

Knowledge of the equilibrium partial pressure of $CO_2$ over alkanolamine solution is essential, particularly in the design of top portion of absorber. The $CO_2$ slip in treated gas is mainly dependent on equilibrium partial pressure. The design of the absorber will have effect on production cost. Therefore, gas-liquid equilibrium data is of importance.

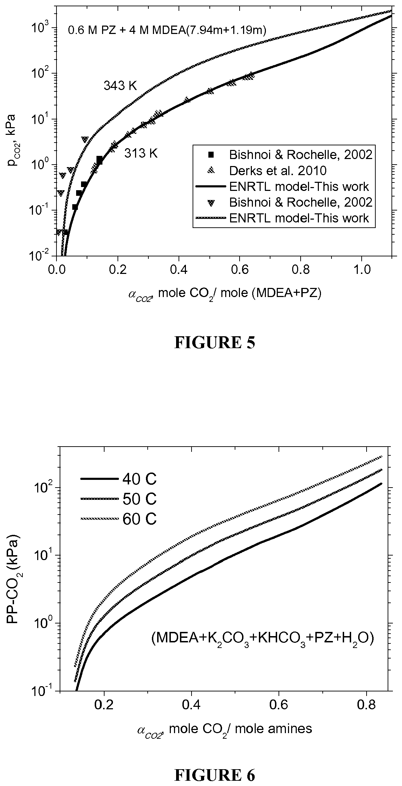

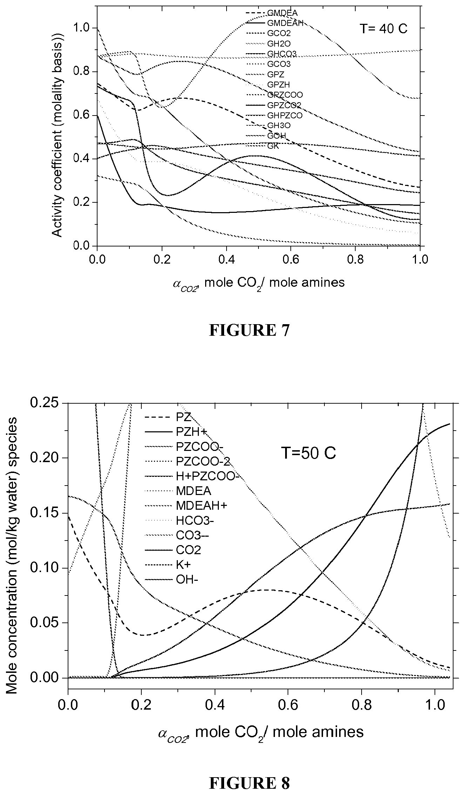

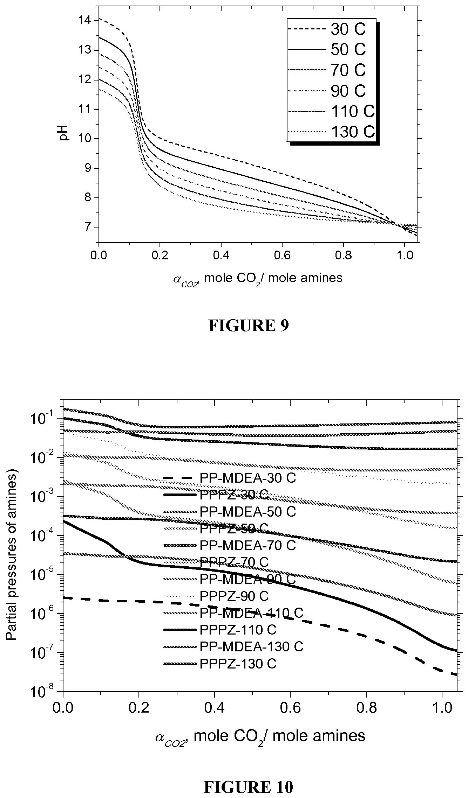

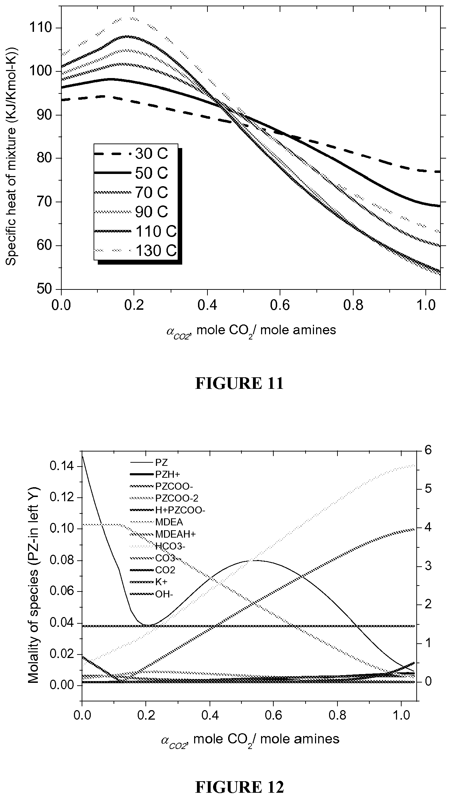

Electrolyte-NRTL model is developed to describe the (Vapour+Liquid) equilibria (VLE) of $CO_2$ in aqueous (MDEA+$K_2CO_3$-$KHCO_3$+PZ) solution. The electrolyte-NRTL model predicted different thermodynamic properties for the system ($CO_2$+MDEA+$K_2CO_3$-$KHCO_3$+PZ+$H_2O$) and are presented in table 6 and 7 and from Figures 3 - 12.

**Table 6.** ENRTL model predicted solubility of $CO_2$ in aqueous (4.081 m MDEA+0.653 m $K_2CO_3$+ 0.147 m $KHCO_3$+ 0.408 m PZ) in the temperature range of (313 333) K. $\alpha_{CO_2}$ is defined as mole $CO_2$/mole amine (MDEA+$K_2CO_3$+$KHCO_3$+PZ)

| T = 313 K | | T =323 K | | T = 333 K | |
|---|---|---|---|---|---|
| $a_{co2}$ | $P_{co2}$ /kPa | $a_{co2}$ | $P_{co2}$ /kPa | $a_{co2}$ | $P_{co2}$ /kPa |
| 0.134 | 0.084 | 0.134 | 0.138 | 120.519 | 0.229 |
| 0.153 | 0.248 | 0.153 | 0.417 | 0.153 | 0.698 |
| 0.172 | 0.426 | 0.172 | 0.738 | 0.172 | 1.263 |
| 0.191 | 0.616 | 0.191 | 1.095 | 0.191 | 1.913 |
| 0.210 | 0.817 | 0.210 | 1.487 | 0.210 | 2.650 |
| 0.229 | 1.034 | 0.229 | 1.920 | 0.229 | 3.480 |
| 0.248 | 1.271 | 0.248 | 2.402 | 0.248 | 4.418 |
| 0.267 | 1.535 | 0.267 | 2.944 | 0.267 | 5.484 |
| 0.286 | 1.833 | 0.286 | 3.561 | 0.285 | 6.700 |
| 0.304 | 2.173 | 0.304 | 4.265 | 0.304 | 8.091 |
| 0.323 | 2.563 | 0.323 | 5.074 | 0.323 | 9.685 |
| 0.342 | 3.014 | 0.342 | 6.005 | 0.342 | 11.512 |
| 0.361 | 3.536 | 0.361 | 7.077 | 0.361 | 13.605 |
| 0.380 | 4.141 | 0.380 | 8.312 | 0.380 | 15.998 |
| 0.399 | 4.841 | 0.399 | 9.732 | 0.399 | 18.729 |
| 0.418 | 5.653 | 0.418 | 11.363 | 0.418 | 21.835 |
| 0.438 | 6.444 | 0.438 | 13.149 | 0.437 | 25.360 |
| 0.458 | 7.630 | 0.456 | 15.155 | 0.456 | 29.347 |
| 0.477 | 8.724 | 0.478 | 17.576 | 0.475 | 33.846 |
| 0.496 | 9.968 | 0.495 | 19.576 | 0.493 | 38.908 |

(continued)

| T = 313 K | | T = 323 K | | T = 333 K | |
|---|---|---|---|---|---|
| $a_{co2}$ | $P_{co2}$ /kPa | $a_{co2}$ | $P_{co2}$ /kPa | $a_{co2}$ | $P_{co2}$ /kPa |
| 0.514 | 11.289 | 0.517 | 22.249 | 0.512 | 40.591 |
| 0.532 | 12.785 | 0.532 | 24.627 | 0.531 | 44.958 |
| 0.552 | 14.691 | 0.552 | 27.615 | 0.550 | 45.219 |
| 0.570 | 16.457 | 0.570 | 30.966 | 0.569 | 51.407 |
| 0.589 | 18.204 | 0.589 | 34.303 | 0.588 | 58.312 |
| 0.606 | 20.393 | 0.608 | 38.427 | 0.607 | 66.015 |
| 0.625 | 22.558 | 0.626 | 42.507 | 0.626 | 74.611 |
| 0.645 | 25.631 | 0.645 | 47.547 | 0.645 | 84.212 |
| 0.664 | 29.524 | 0.664 | 54.145 | 0.664 | 94.951 |
| 0.683 | 34.015 | 0.683 | 61.637 | 0.683 | 106.988 |
| 0.701 | 39.216 | 0.701 | 70.171 | 0.701 | 120.519 |
| 0.720 | 45.265 | 0.720 | 79.928 | 0.720 | 135.786 |
| 0.739 | 52.336 | 0.739 | 91.139 | 0.739 | 153.088 |
| 0.758 | 60.657 | 0.758 | 104.096 | 0.758 | 172.797 |
| 0.777 | 70.526 | 0.777 | 119.177 | 0.777 | 195.384 |
| 0.796 | 82.344 | 0.796 | 136.879 | 0.796 | 221.442 |
| 0.815 | 96.653 | 0.815 | 157.856 | 0.815 | 251.720 |
| 0.834 | 114.210 | 0.834 | 182.984 | 0.834 | 287.167 |

**Table 7** Comparison of VLE ($P_{CO2}$ Vs Loading) for different solvents at 40 °C and at 5 kPa of $CO_2$ partial pressure at absorber condition.

| | Composition | Loading | P-$CO_2$= 5 kPa, T = 40 C |
|---|---|---|---|
| $H_2O$+MDEA | 30 wt% MDEA | 0.38 | Mol $CO_2$/mol Amine |
| $H_2O$+MDEA+PZ | 7.9 m MDEA+1.19 m PZ (4M MDEA+ 0.6M PZ) | 0.36 | Mol $CO_2$/mol Amine |
| PZ+$H_2O$ | 3.2 MPZ | 0.793 | Mol $CO_2$/ mol Amine |
| $H_2O$+$K_2CO_3$ | 30 wt% $K_2CO_3$ (= 6.2 m $K^+$) | 0.45 | Mol $CO_2$/mol $K_2CO_3$ |
| | | 0.225 | Mol $CO_2$/mol $K^+$ |
| APBS1 (total 38.7 wt%) or (5.48 m, Mol/kg water) | MDEA = 30 wt % | 0.401 | Mol $CO_2$/mol (Amine + $K^+$) |
| | PZ =2.5 wt% | | |
| | $K_2CO_3$ =5.5 wt% | | |
| | $KHCO_3$=0.9 wt% | | |

**e) Heat of Absorption for MDEA-PZ-$K_2CO_3$-$KHCO_3$-$H_2O$ blend**

The heat of absorption of $CO_2$ into a solvent is an important parameter, since it gives magnitude of heat released during the absorption process. Besides, it represents the energy required in the regenerator to reverse the reaction and release $CO_2$ from the solvent. The differential heat of absorption of $CO_2$ into (4.081 m MDEA+0.653 m $K_2CO_3$+ 0.147

m KHCO$_3$+ 0.408 m PZ) solvent is estimated from the ENRTL model based on the Clausius - Clapeyron equation:

$$\frac{-\Delta H_{abs}}{R} = \frac{d \ln P_{CO2}}{d \left(\frac{1}{T}\right)}$$

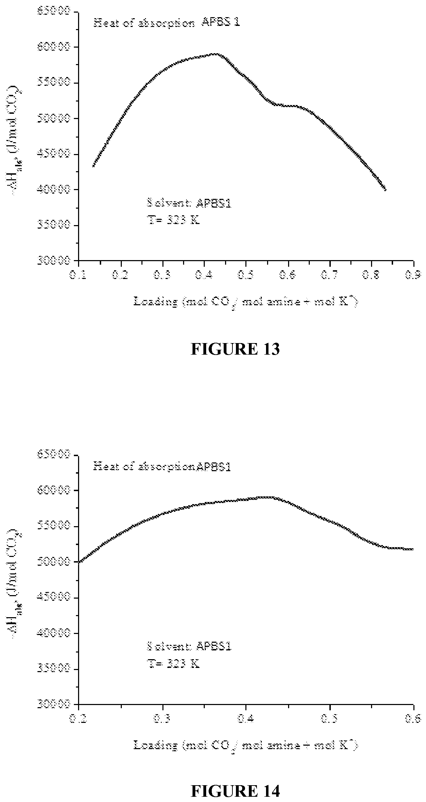

Figure 13 and Figure 14 shows the calculated heat of absorption for (4.081 m MDEA+0.653 m K$_2$CO$_3$+ 0.147 m KHCO$_3$+ 0.408 m PZ) solvent at 323 K as a function of CO$_2$ loading. The $\Delta H_{abs}$ is estimated to be around 56 kJ/mol CO$_2$ by taking an average value between loading 0.2 to 0.6.

**EXAMPLE 3: CO$_2$-MDEA-MPZ-K$_2$CO$_3$-KHCO$_3$-H$_2$O SYSTEM**

The CO$_2$ reaction with promoted amines/carbonate blend is investigated over the ranges in temperature, 298 to 308 K, and MPZ concentrations, 0.15 to 0.45 M. The concentrations of MDEA, K$_2$CO$_3$ and KHCO$_3$ in solution are 2.5, 0.4 and 0.09 M, respectively. This reaction system belongs to the fast reaction regime systems.

**a) Estimation of physical properties for MDEA-MPZ-K$_2$CO$_3$-KHCO$_3$-H$_2$O blends**

Knowledge on physical properties is essential for the estimation of reaction kinetics. The density and viscosity of the blend comprising MDEA, K$_2$CO$_3$/KHCO$_3$, promoter (methyl piperazine) and H$_2$O were measured at 298, 303 and 308.
MIX* = MDEA (2.5 M), KHCO$_3$ (0.09M), K$_2$CO$_3$ (0.4 M) and n-Methyl Piperizine.

**Table 8:** Density (p), Viscosity ($\mu$) and Diffusivity Data (D$_{CO2}$) for MIX* at different methyl Piperazine concentration at 298, 303 and 308 K

| T | MPZ Conc. | $\rho$ | $\mu$ | D$_{CO2}$x109 |
|---|---|---|---|---|
| (K) | (M) | (kg/m$^3$) | (kg/(m.s)) | (m$^2$/s) |
| | | | | |
| | Mix + 0.15 | 1066.35 | 1.70 | 1.20 |
| | Mix + 0.25 | 1074.04 | 1.74 | 1.18 |
| 298 | Mix + 0.35 | 1081.61 | 1.80 | 1.15 |
| | Mix + 0.45 | 1088.85 | 1.84 | 1.13 |
| | | | | |
| | Mix + 0.15 | 1065.87 | 1.37 | 1.48 |
| | Mix + 0.25 | 1073.19 | 1.43 | 1.42 |
| 303 | Mix + 0.35 | 1080.44 | 1.48 | 1.38 |
| | Mix + 0.45 | 1087.04 | 1.54 | 1.34 |
| | | | | |
| | Mix + 0.15 | 1064.96 | 1.23 | 1.67 |
| | Mix + 0.25 | 1072.35 | 1.27 | 1.62 |
| 308 | Mix + 0.35 | 1079.07 | 1.30 | 1.60 |
| | Mix + 0.45 | 1086.22 | 1.35 | 1.55 |

**b) Reaction kinetic data for MDEA-MPZ-K$_2$CO$_3$-KHCO$_3$-H$_2$O blends**

With increase in temperature & promoter concentration cause the expected increase in the values of the observed reaction rate constants.

**Table 9.** $CO_2$ absorption rates and values of the observed reaction rate constant into aqueous mixtures of MDEA (2.5 M), MPZ, $K_2CO_3$ (0.4 M) and $KHCO_3$ (0.09 M) at 298, 303 and 308 K

| Temp. (K) | $CO_2$ pressure (kPa) | MPZ (M) | R x $10^6$ (kmol/($m^2$ s)) | $k_{obs}$ (1/s) |
|---|---|---|---|---|
| 298 | 9.5 | 0.15 | 8.70 | 8062 |
| | 5.7 | 0.25 | 5.94 | 8508 |
| | 4.7 | 0.35 | 5.72 | 9253 |
| | 5.7 | 0.45 | 7.78 | 10355 |
| 303 | 7.9 | 0.15 | 7.72 | 8465 |
| | 5.5 | 0.25 | 6.44 | 9053 |
| | 5.76 | 0.35 | 7.60 | 9384 |
| | 5.75 | 0.45 | 8.38 | 10556 |
| 308 | 5.92 | 0.15 | 4.5 | 9940 |
| | 7.02 | 0.25 | 8.33 | 12385 |
| | 4.3 | 0.35 | 6.22 | 14248 |
| | 7.56 | 0.45 | 13.9 | 20246 |

**Table 10.** Effect of MDEA concentration into aqueous mixtures of MDEA, MPZ (0.25 M), $K_2CO_3$ (0.4 M) and $KHCO_3$ (0.09 M) at 303 K

| MDEA (M) | $CO_2$ Pressure (kPa) | R x $10^6$ (kmol/($m^2$ s)) |
|---|---|---|
| 1.5 | 4.9 | 5.22 |
| 2.5 | 5.5 | 6.44 |
| 3.5 | 5.8 | 6.89 |

**c) Solubility data for MDEA-MPZ-$K_2CO_3$-$KHCO_3$-$H_2O$ blends Solubility of $CO_2$ in the mixture** [MDEA (2.5M) + $K_2CO_3$ (0.4M) + $KHCO_3$ (0.0925M) + MPZ]

Knowledge on $CO_2$ solubility in solution is essential for estimation of reaction kinetics.

**Table 11.** Solubility of $CO_2$ in the mixture [MDEA (2.5M) + $K_2CO_3$ (0.4M) + $KHCO_3$ (0.0925M) + M-PZ] 298, 303 and 308 K

| T (K) | MPZ Conc. (M) | $H_{CO2}$ X $10^4$ [kmol/($m^3$ .kPa)] |
|---|---|---|
| | | |
| 298 | Mix+ 0.15 | 2.95 |
| | Mix+ 0.15 | 3.30 |
| | Mix+ 0.15 | 3.73 |
| | Mix+ 0.15 | 3.98 |
| | | |

(continued)

| T | MPZ Conc. | $H_{CO_2} X 10^4$ |
|---|---|---|
| (K) | (M) | [kmol/(m$^3$ .kPa)] |
| 303 | Mix+ 0.15 | 2.76 |
| | Mix+ 0.15 | 3.26 |
| | Mix+ 0.15 | 3.66 |
| | Mix+ 0.15 | 3.87 |
| | | |
| 308 | Mix+ 0.15 | 1.91 |
| | Mix+ 0.15 | 2.67 |
| | Mix+ 0.15 | 3.03 |
| | Mix+ 0.15 | 3.23 |

### d) Vapour - Liquid Equilibrium Data for MDEA-MPZ-$K_2CO_3$-$KHCO_3$-$H_2O$blend

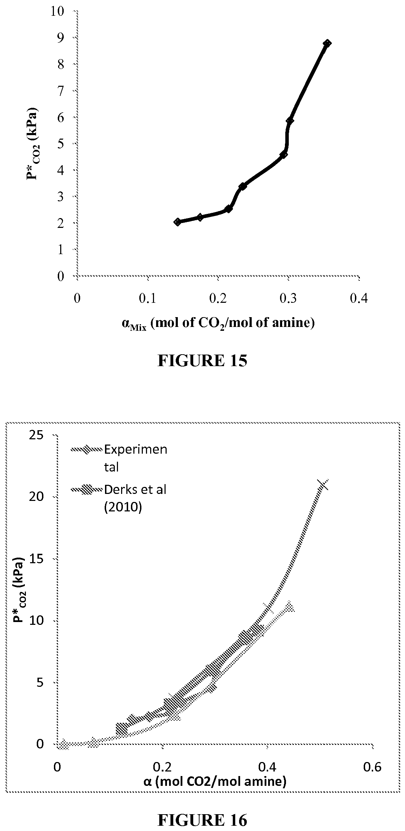

Knowledge of the equilibrium partial pressure of $CO_2$ over alkanolamine solution is essential, particularly in the design of top portion of absorber. The $CO_2$ slip in treated gas is mainly dependent on equilibrium partial pressure. The design of the absorber will have effect on production cost. Therefore, gas-liquid equilibrium data is of importance. See Table 12 and 13 and Figure 15.

Table 12: Equilibrium $CO_2$ partial pressure over MDEA-MPZ-$K_2CO_3$-$KHCO_3$-$H_2O$ blend.$\alpha_{CO_2}$ is defined as mole $CO_2$/ mole amine (MDEA + MPZ + $KHCO_3$ + $K_2CO_3$) Temperature: 303 K

| $\alpha_{Mix}$ | $P^*_{CO2}$ |
|---|---|
| (mole $CO_2$/mole amine) | (kPa) |
| | |
| 0.142 | 2.03 |
| 0.174 | 2.21 |
| 0.215 | 2.53 |
| 0.235 | 3.38 |
| 0.293 | 4.59 |
| 0.302 | 5.86 |
| 0.355 | 8.78 |

Literature Comparison with ($CO_2$ + MDEA) and ($CO_2$ + MDEA-MPZ-$K_2CO_3$-$KHCO_3$). See table 13 and figure 16.

Table 13:

| Derks et al 2010 | | Jou et al 1982 | | Kundu et al 2006 | |
|---|---|---|---|---|---|
| $\alpha_{Mix}$ | $P^*_{CO2}$ | $\alpha_{Mix}$ | $P^*_{CO2}$ | $\alpha_{Mix}$ | $P^*_{CO2}$ |
| (mole $CO_2$/mole amine) | (kPa) | (mole $CO_2$/mole amine) | (kPa) | (mole $CO_2$/mole amine) | (kPa) |
| 0.122 | 1.25 | 0.012 | 0.0132 | 0.22 | 3.7 |
| 0.213 | 3.24 | 0.0676 | 0.184 | 0.401 | 11 |
| 0.294 | 5.97 | 0.224 | 2.38 | 0.505 | 21 |
| 0.361 | 8.5 | 0.441 | 11.2 | - | - |

(continued)

| Derks et al 2010 | | Jou et al 1982 | | Kundu et al 2006 | |
|---|---|---|---|---|---|
| $\alpha_{Mix}$ | $P^*_{CO2}$ | $\alpha_{Mix}$ | $P^*_{CO2}$ | $\alpha_{Mix}$ | $P^*_{CO2}$ |
| (mole $CO_2$/mole amine) | (kPa) | (mole $CO_2$/mole amine) | (kPa) | (mole $CO_2$/mole amine) | (kPa) |
| 0.382 | 9.2 | - | - | - | - |

The obtained experimental vapour - liquid data is in good agreement with previously published research articles.

**EXAMPLE 4: EFFICIENCY OF THE SOLVENT SYSTEMS IN COMPARISON WITH THE CONVENTIONAL SOLVENT SYSTEM**

The present example illustrates the results of solvents tested on Promax, a simulation software licensed by Bryan Research and Engineering with conventional carbon capture process configuration.

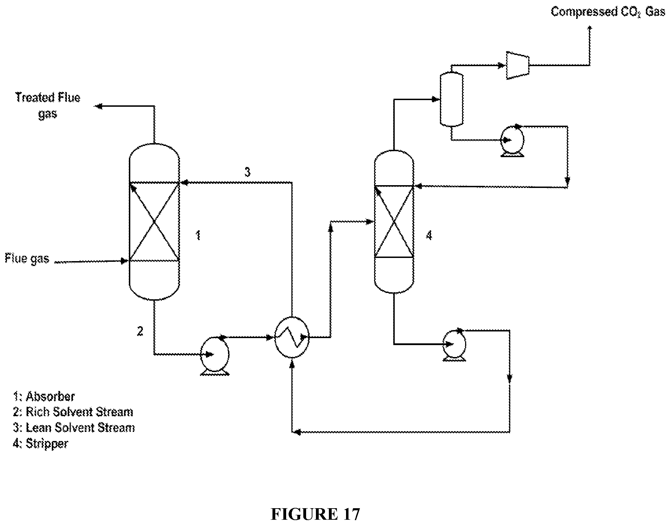

The conventional process has an absorber operating at 1 atm. The flue gas enters at 46 °C and 1 atm and comes in contact with lean solvent from the stripper. The bottom stream leaving the absorber known as rich solvent enters the cross exchanger which has a temperature approach of 5 °C and enters the stripper. The stripper operates at 100-120 °C and 2 atm for different solvents. The stream leaving from top of the stripper is cooled and condensed to remove the water present in the strip gas. Thus condenser's top stream is compressed to 2.97 atm to achieve 90% carbon dioxide recovery with 99% (% wt) purity. Figure 17 shows a process flow diagram of conventional carbon capture system

Table 14: APBS Solvent Composition

| Solvents | Composition | | | |
|---|---|---|---|---|
| | MDEA | PZ | K+ | Water |
| APBS1 | 29.1 | 2.1 | 4.89 | 36.09 |
| APBS2 | 38.25 | 6.75 | 5 | 50 |
| APBS3 | 30 | 6.75 | 13.25 | 50 |
| APBS4 | 50 | 6 | 15 | 29 |

The above chart shows that ABPS2, ABPS3 and APBS4 have less steam demand with respect to other solvents. The above chart shows that ABPS2, ABPS3 and ABPS4 have comparable recirculation rate to existing solvents

**Results:**

Following are results which are derived from simulation on above process configuration.

Table 15:

| Parameters | Units | 30 (%wt) MEA | 41.6 (wt%) MDEA & 8.58 (wt %) PZ | 50 (%wt) MDEA & 5% wt PZ | 7.95 (wt %) K+ & 3.96 (wt %) PZ |
|---|---|---|---|---|---|
| Steam Demand | kg of steam/kg of $CO_2$ | 1.76 | 1.88 | 1.49 | 4.42 |
| Lean solvent flowrate | kg/h | 168.26 | 160.02 | 346.84 | 1013.2 |
| Lean solvent loading | mol/mol | 0.22 | 0.018 | 0.077 | 0.56 |
| Rich solvent flowrate | kg/h | 173.19 | 166.1 | 357.01 | 1023.78 |
| Rich solvent loading | mol/mol | 0.53 | 0.38 | 0.23 | 0.7 |
| $CO_2$ capture Auxiliary loads | W | 19.47 | 21.35 | 41.62 | 117.76 |

(continued)

| Parameters | Units | 30 (%wt) MEA | 41.6 (wt %) MDEA & 8.58 (wt %) PZ | 50 (%wt) MDEA & 5% wt PZ | 7.95 (wt %) K+ & 3.96 (wt %) PZ |
|---|---|---|---|---|---|
| $CO_2$ compressor auxiliary loads | W | 201.75 | 277.69 | 181.15 | 200.7 |
| Total auxiliary loads | W | 221.22 | 299.04 | 222.77 | 318.46 |
| Cooling water duty | kW | 7.15 | 9.02 | 9.3 | 28.66 |
| Total steam duty | kW | 11.88 | 12.95 | 10 | 29.8 |

Table 16:

| Parameters | Units | APBS1 | APBS2 | APBS3 | APBS4 |
|---|---|---|---|---|---|
| Steam Demand | kg of steam/kg of $CO_2$ | 3.76 | 1.41 | 1.3 | 1.16 |
| Lean solvent flowrate | kg/h | 1888 | 301.19 | 297.02 | 277.29 |
| Lean solvent loading | mol/mol | 0.22 | 0.21 | 0.38 | 0.32 |
| Rich solvent flowrate | kg/h | 1899 | 311.53 | 308.08 | 290.43 |
| Rich solvent loading | mol/mol | 0.26 | 0.387 | 0.543 | 0.45 |
| $CO_2$ capture Auxiliary loads | W | 217.07 | 34.09 | 30.46 | 27.06 |
| $CO_2$ compressor auxiliary loads | W | 190.63 | 184.86 | 182.64 | 178.72 |
| Total auxiliary loads | W | 407.7 | 218.95 | 213.1 | 205.78 |
| Cooling water duty | kW | 25.25 | 8.91 | 8.56 | 8.86 |
| Total Reboiler duty | kW | 25.4 | 9.7 | 8.8 | 7.8 |

The above result is a detailed comparison of various solvents simulated on conventional system using Promax. The proposed APBS solvent shows lower steam demand in comparison to other existing solvent or combination of solvents. The steam used in reboiler in all the above cases is at 4.4 atm and 151 °C. The recirculation rate i.e. lean solvent flow rate is illustrated in the above table. Due to decreased lean solvent flowrate the power requirement of pump i.e. auxiliary load is also lower for ABPS2, APBS3 and ABPS4. Thus overall power requirement for entire carbon capture and compressing of $CO_2$ goes down. The steam demand is also less in case of APBS solvent hence the total steam duty is also less for ABPS2, APBS3 and ABPS4. The cooling water duty is higher only in APBS1 while in ABPS2, APBS3 and APBS4 is lower in comparison to other solvents.

**Claims**

1. A solvent for recovery of carbon dioxide from gaseous mixture, comprising:

   N-methyldiethanolamine (MDEA) at a concentration from 10 wt% to 50 wt%,
   a promoter which is piperazine or N-methyl piperazine and is at a concentration from 0.5 wt% to 50 wt%, and
   a carbonate buffer consisting of potassium carbonate and potassium bicarbonate, at a concentration between 2 wt% and 25 wt%.

2. The solvent as claimed in Claim 1, wherein the promoter selected from the group consisting of piperazine (PZ) and N-methyl piperazine is present in a aqueous mixture with MDEA, $K_2CO_3$ and $KHCO_3$ and is between 0.15M and 0.45M.

3. The solvent as claimed in Claim 2, wherein the concentrations of MDEA, $K_2CO_3$ and $KHCO_3$ in solution are 2.5 M, 0.4 M, and 0.09 M, respectively.

4. The solvent as claimed in Claim 1, wherein the concentration range of MDEA is 29.1-38.25 M, piperazine is 2.1-6.75 M, and $K^+$ is 4.89-15 M.

5. A method for removing $CO_2$ from a stream, comprising the steps of:

   (a) contacting the stream with a solvent according to any of the preceding claims, and
   (b) allowing the solvent to absorb $CO_2$.

**Patentansprüche**

1. Lösungsmittel zur Rückgewinnung von Kohlendioxid aus Gasgemisch, umfassend:

   N-Methyldiethanolamin (MDEA) in einer Konzentration von 10 Gew.-% bis 50 Gew.-%,
   einen Promotor, der Piperazin oder N-Methylpiperazin ist und eine Konzentration von 0,5 Gew.-% bis 50 Gew.-% aufweist, und
   einen Carbonatpuffer bestehend aus Kaliumcarbonat und Kaliumbicarbonat, mit einer Konzentration zwischen 2 Gew.-% und 25 Gew.-%.

2. Lösungsmittel nach Anspruch 1, wobei der Promotor, der ausgewählt ist aus der aus Piperazin (PZ) und N-Methylpiperazin bestehenden Gruppe, in einem wässrigen Gemisch mit MDEA, $K_2CO_3$ und $KHCO_3$ vorliegt und zwischen 0,15 M und 0,45 M liegt.

3. Lösungsmittel nach Anspruch 2, wobei die Konzentrationen von MDEA, $K_2CO_3$ und $KHCO_3$ in Lösung 2,5 M, 0,4 M bzw. 0,09 M lauten.

4. Lösungsmittel nach Anspruch 1, wobei der Konzentrationsbereich von MDEA 29,1-38,25 M beträgt, Piperazin 2,1-6,75 M beträgt und $K^+$ 4,89-15 M beträgt.

5. Verfahren zum Entziehen von $CO_2$ aus einem Strom, umfassend die folgenden Schritte:

   (a) Inkontaktbringen des Stroms mit einem Lösungsmittel nach einem der vorhergehenden Ansprüche, und
   (b) Zulassen, dass das Lösungsmittel $CO_2$ absorbiert.

**Revendications**

1. Solvant pour récupération de dioxyde de carbone de mélanges gazeux, comprenant :

   de la N-méthyldiéthanolamine (MDEA) à une concentration se situant entre 10 % en poids et 50 % en poids,
   un promoteur qui est de la pipérazine ou de la pipérazine de méthyle-n et est à une concentration se situant entre 0,5 % en poids et 50 % en poids, et
   un tampon de carbonate consistant en carbonate de potassium et en bicarbonate de potassium, à une concentration se situant entre 2 % en poids et 25 % en poids.

2. Solvant selon la revendication 1, dans lequel le promoteur choisi dans le groupe consistant en pipérazine (PZ) et en pipérazine de méthyle-n est présent dans un mélange aqueux avec de la MDEA, du $K_2CO_3$ et du $KHCO_3$, et se situe entre 0,15 M et 0,45 M.

3. Solvant selon la revendication 2, dans lequel les concentrations de MDEA, $K_2CO_3$ et $KHCO_3$ en solution sont de 2,5 M, 0,4 M et 0,09 M respectivement.

4. Solvant selon la revendication 1, dans lequel la gamme de concentration de la MDEA est de 29,1-38,25 M, la gamme de concentration de la pipérazine est de 2,1-6,75 M et la gamme de concentration du $K^+$ est de 4,89-15 M.

5. Procédé d'élimination de CO2 d'un flux, comprenant les étapes consistant à :

   (a) mettre le flux en contact avec un solvant selon l'une quelconque des revendications précédentes, et

(b) laisser le solvant absorber le $CO_2$.

**FIGURE 1**

1. Gas Saturator        2. Equilibrium Cell        3. Gas Reservoir
4. Blower               5. Conductivity Probe      6. Temperature Controller

**FIGURE 2**

18

**FIGURE 3**

**FIGURE 4**

**FIGURE 5**

**FIGURE 6**

**FIGURE 7**

**FIGURE 8**

**FIGURE 9**

**FIGURE 10**

**FIGURE 11**

**FIGURE 12**

**FIGURE 13**

**FIGURE 14**

**FIGURE 15**

**FIGURE 16**

Compressed CO₂ Gas

Treated Flue
gas

Flue gas

3

1

2

4

1: Absorber
2: Rich Solvent Stream
3: Lean Solvent Stream
4: Stripper

**FIGURE 17**

**EP 2 618 914 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0224348 A2
- DE 19828977 A1
- WO 2004089512 A1
- US 4440731 A
- RU 2244587